# EUROPÄISCHE PATENTSCHRIFT

(11) **EP 4 004 413 B1**
(45) Veröffentlichungstag und Bekanntmachung des Hinweises auf die Patenterteilung: **05.06.2024**
(21) Anmeldenummer: 19746060.3
(22) Anmeldetag: 23.07.2019
(51) Int. Cl.: F16K 11/085, F16K 5/04, F01P 7/16

(54) **DREHSCHIEBERVENTIL FÜR EINEN KÜHLKREISLAUF**
ROTARY SLIDE VALVE FOR A COOLING CIRCUIT
DISTRIBUTEUR À TIROIR ROTATIF CONÇU POUR UN CIRCUIT DE REFROIDISSEMENT

(43) Veröffentlichungstag der Anmeldung: 01.06.2022
(73) Patentinhaber: Pierburg GmbH, 41460 Neuss (DE)
(72) Erfinder: BADEN, Matthias, 41460 Neuss (DE); TÖNNESMANN, Andres, 41460 Neuss (DE); KREBBER-HORTMANN, Karl, 41460 Neuss (DE); GISSING, Jörg, 41460 Neuss (DE); MAFFEIS, Jerome, 57974 Yutz Cédex (FR); GEORGES, Pascal, 57974 Yutz Cédex (FR)
(74) Vertreter: terpatent Patentanwälte und European Patent Attorneys ter Smitten Eberlein -Van Hoof
(86) Internationale Anmeldenummer: PCT/EP2019/069804
(87) Internationale Veröffentlichungsnummer: WO 2021/013340

(56) Entgegenhaltungen:
- EP-A1- 3 009 719
- DE-B4- 10 219 577
- JP-A- H09 156 339
- US-A1- 2009 065 172
- US-B1- 6 289 913
- US-B1- 6 315 267
- US-B1- 6 361 051

## Beschreibung

Die Erfindung betrifft ein Drehschieberventil für einen Kühlkreislauf mit einem eine zylindrische Innenkontur aufweisenden Gehäuse, einem Regelkörper, der drehbar im Gehäuse angeordnet ist, und eine zylindrische Außenkontur und zumindest eine Durchströmungsöffnung aufweist, zumindest einer ersten Anschlussöffnung am Gehäuse, zumindest einer senkrecht zu einer Drehachse des Regelkörpers angeordneten zweiten Anschlussöffnung am Gehäuse, die über die zumindest eine Durchströmungsöffnung des Regelkörpers mit der zumindest einen ersten Anschlussöffnung fluidisch verbindbar ist, und zumindest einem Dichtelement, das radial zwischen dem Regelkörper und einer die zumindest eine zweite Anschlussöffnung umgebenden Gehäuseinnenwand angeordnet ist, und eine Grundplatte mit einer Öffnung aufweist, die korrespondierend zur zweiten Anschlussöffnung im Gehäuse ausgebildet ist.

Derartige Drehschieberventile finden beispielsweise Verwendung in den Kühlkreisläufen von Verbrennungsmotoren, Hybridantrieben oder rein elektrischen Antriebsmotoren für Kraftfahrzeuge. Sie können mit mehreren Ein- und Auslässen ausgebildet werden, die jedoch gegeneinander abgedichtet werden müssen. Bei zylindrischen Drehschieberventilen werden die Ein- und Auslässe zumeist als Stutzen an der Zylinderfläche ausgebildet, wobei ein Einlass oder Auslass auch an einer axialen Kopffläche ausgebildet werden kann. Die verschiedenen Einlässe und Auslässe dienen dazu, den Kühlmittelstrom auf die zu kühlenden Bauteile, wie die Motoren selbst, Aggregate einer Klimaanlage, die Batterie oder auch Kühler für die Luft oder gegebenenfalls vorhandenes Abgas entsprechend den Erfordernissen stufenlos zu regeln und zu verteilen. Solche Drehschieber weisen zumeist eine axiale Ventil-Längsachse auf, um die und/oder entlang derer der zylindrische Regelkörper innerhalb eines Ventilgehäuses bewegbar gelagert ist.

Zur Vermeidung einer Leckageströmung zwischen einem ersten Ventilanschluss, insbesondere einem Ventileinlass, und einem zweiten Ventilanschluss, insbesondere einem Ventilauslass, im geschlossenen Zustand des Drehschiebers ist in der Regel zumindest ein Dichtelement vorgesehen. Das Dichtelement ist zumeist koaxial zu dem Anschlussstutzen angeordnet und weist eine zur Ventil-Längsachse senkrecht angeordnete Dichtelement-Längsachse auf. Zur Abdichtung liegt das Dichtelement zumeist mit einem axial wirkenden Dichtbereich an der Außenkontur des Regelkörpers und an einer Gehäuseinnenwand auf.

Das Dichtelement ist häufig als Dichtungsring ausgebildet, welcher einen V-förmigen Querschnitt aufweist, so dass einer der Schenkel gegen die Gehäuseinnenwand oder einen Anschlussstutzen verspannt ist und der andere Schenkel gleitbeweglich gegen den Regelkörper anliegt.

Beim Öffnen und Schließen des Ventils, das heißt beim Drehen des Regelkörpers, gleitet der Regelkörper mit der Außenkontur an dem Dichtelement entlang und dichtet gleichzeitig ab, idealerweise ohne dass ein Abschaben des Dichtelements durch die Reibung bei der Bewegung zu befürchten ist. Zur Verbesserung der Dichtwirkung kann das Dichtelement zumindest im geschlossenen Zustand des Ventils mittels eines elastischen Vorspannenelementes axial in Richtung des Regelkörpers vorgespannt sein, so dass das an dem Regelkörper anliegende Dichtelement eine Leckageströmung zwischen den beiden Ventilanschlüssen blockiert. Bei Vorliegen von mehreren senkrecht zur Längsachse des Regelkörpers angeordneten Ventilanschlüssen kann selbstverständlich an jedem dieser Ventilanschlüsse jeweils ein solches Dichtelement angeordnet sein.

Ein derartiges Dichtelement ist beispielswiese aus der DE 102 19 577 B4 bekannt. Dieses Dichtelement ist in einem zylindrischen Drehschieber zwischen dem Regelkörper und einem in eine Öffnung des Gehäuses gesteckten Anschlussstutzen befestigt. Das Dichtelement ist im Wesentlichen im Querschnitt U-förmig, wobei der eine Schenkel am Anschlussstutzen und der andere am Regelkörper anliegt. Die offene Seite des Dichtelementes liegt gegen eine die Öffnung begrenzende Wand des Gehäuses an, sodass das Dichtelement im Gehäuse allseits fixiert ist. Problematisch ist es jedoch, dass es immer notwendig ist, die Anschlussstutzen separat herzustellen und am Gehäuse zu befestigen, um das Dichtelement befestigen zu können, da hierdurch zusätzliche Positionen für eine mögliche Leckage gebildet werden.

Des Weiteren ist aus der DE 11 2016 006 319 T5 ein rotationssymmetrisches Dichtelement bekannt, welches zur Befestigung von Innen in eine entsprechende Ausnehmung im Gehäuse eingesetzt wird und dessen entgegengesetztes axiales Ende gegen den Regelkörper anliegt. Bei diesem Dichtelement ist die Montage sehr aufwendig, da das Dichtelement allseits radial innerhalb des Gehäuses zusammengedrückt und dann eingesetzt werden muss. Zusätzlich muss beim Einführen des Regelkörpers das Dichtelement axial zusammengeschoben werden, um Schäden zu vermeiden. So kommt es zu hohen Ausschüssen bei der Fertigung des Drehschieberventils.

Zusätzlich ist aus der US 6,361,051 B1 ein Drehschieberventil bekannt, welche in eine Ausnehmung am Einlass beziehungsweise Auslass eingesetzt ist. Dieses weist eine nach innen gerichtete Dichtlippe auf, die gegen den Regelkörper anliegt.

Aus der US 6,315,267 B1 ist ein weiters Drehschieberventil mit einer Flachdichtung zwischen dem Regelkörper und dem umliegenden Gehäuse bekannt, welche ebenfalls in einer entsprechenden Ausnehmung am Einbeziehungsweise Auslass angeordnet ist.

Eine weitere solche Dichtung für ein Drehschieberventil ist aus der JP H09 156339 A bekannt. Diese Dichtung liegt seitlich gegen Vorsprünge am Gehäuse an.

Es stellt sich daher die Aufgabe, ein Drehschieberventil für einen Kühlkreislauf zur Verfügung zu stellen, dessen Dichtelement leicht und schadenfrei montierbar ist und möglichst vorfixiert werden kann. Des Weiteren soll bei Erreichen einer hohen Dichtigkeit eine Leichtgängigkeit des Regelkörpers sichergestellt werden.

Diese Aufgaben werden durch ein Drehschieberventil für einen Kühlkreislauf mit den Merkmalen des Hauptanspruchs 1 gelöst.

Dadurch, dass das Dichtelement zwei sich axial erstreckende Seitenflächen aufweist, die gegenüberliegend zu zwei sich parallel zur Drehachse erstreckende Vorsprünge angeordnet sind, die an der Gehäuseinnenwand ausgebildet sind, kann das Dichtelement entweder axial eingeschoben oder zwischen die Vorsprünge durch ein Zusammendrücken der Seitenflächen und anschließendes radiales Einführen eingesetzt und somit befestigt werden. So wird eine Vorfixierung vor dem Einführen des Regelkörpers hergestellt, durch die die Lage im Betrieb wie gewünscht sichergestellt wird. Ein Verschieben in Umfangsrichtung im Betrieb durch Drehen des Regelkörpers wird ausgeschlossen. Das Dichtelement weist dabei eine Grundplatte auf, an der die Seitenflächen ausgebildet sind und die zumindest teilweise gegen den Regelkörper anliegt. Durch diese Grundplatte kann eine große Auflagefläche zum drehbaren Regelkörper hergestellt werden, wodurch aufgrund der größeren Berührungsflächen der Strömungswiderstand erhöht wird und somit eine gute Dichtigkeit auch bei geringerer Anpresskraft erzielt wird. Auch ist es möglich, dass lediglich eine abgesetzte, die Öffnung umgebende Struktur gegen den Regekörper anliegt, während die übrige Grundplatte als Tragestruktur dient. Das Dichtelement ist im unverbauten Zustand geringfügig stärker gekrümmt als die Außenkontur des Regelkörpers, wodurch beim Einsetzen des Regelkörpers eine erhöhte Vorspannung des Dichtelementes erzielt wird. Zusätzlich erstreckt sich von der Grundplatte eine Dichtlippe, die im Querschnitt V-förmig zur Grundplatte ausgerichtet ist. Durch diese Ausformung kann das Dichtelement mit dieser Dichtlippe gegen die die Öffnung umgebende Wand mit einem Anpressdruck belastet werden, wodurch sich die Dichtigkeit der Dichtung durch die erzeugte Verformung erhöht. Die Öffnung in der Grundplatte ist korrespondierend zur zweiten Anschlussöffnung im Gehäuse ausgebildet, wobei sich die Dichtlippe von der die Öffnung begrenzenden Öffnungskante der Grundplatte aus erstreckt. Somit wird die Anschlussöffnung direkt von dieser Dichtlippe umgeben und abgedichtet. Durch das Vorspannen der Dichtlippe gegen die Gehäuseinnenwand wird die Dichtigkeit deutlich erhöht.

Entsprechend ist das Dichtelement in Umfangsrichtung formschlüssig im Gehäuse durch die Gehäuseinnenwand und die sich axial erstreckenden Vorsprünge befestigt, da das Dichtelement in diesem Zustand dreiseitig durch die Vorsprünge und die Verspannung gegen die Gehäuseinnenwand fixiert ist.

Vorzugsweise ist an den Seitenflächen des Dichtelementes eine Stützstruktur ausgebildet, um eine größere Anlagefläche der Seitenflächen zur Verfügung zu stellen und eine größere Stabilität des Dichtelementes zu erhalten.

In einer weiterführenden Ausführungsform ist die Stützstruktur durch eine Verdickung der Seitenflächen der Grundplatte gebildet, wobei die Verdickungen der Seitenflächen gegenüberliegend zu den Vorsprüngen an der Gehäuseinnenwand angeordnet sind. Durch diese Form wird einerseits eine höhere Steifigkeit der Grundplatte erzielt und anderseits die Befestigung an den Vorsprüngen deutlich vereinfacht, da durch die größere Ausdehnung der Seitenflächen die Vorsprünge mit größerem Abstand zum Regelkörper hergestellt werden können, sodass nicht mit engen Toleranzen gefertigt werden muss, um diese Befestigungsstruktur zu verwirklichen.

In einer bevorzugten Ausführung weist die Grundplatte zwei Seitenkanten auf, die senkrecht zu den Seitenflächen angeordnet sind, die gegenüberliegend zu den Vorsprüngen angeordnet sind, und mit denen die Grundplatte gegenüberliegend zu zwei das Gehäuse axial begrenzenden Innenwänden oder Vorsprüngen angeordnet ist. Durch diese Seitenkanten erfolgt entsprechend neben der Befestigung in Umfangsrichtung auch eine Befestigung in axialer Richtung, so dass eine Bewegung des Dichtelementes relativ zum Gehäuse ausgeschlossen werden kann. Das Dichtelement kann je nach Ausführung des Ventils beispielsweise einfach von der offenen axialen Seite des Gehäuses zwischen die Vorsprünge und bis gegen die gegenüberliegende axial begrenzende Wand geschoben werden. Anschließend kann die offene Seite des Ventils durch einen Deckel geschlossen werden, der dann gegen die zweite Seitenkante anliegt, wodurch eine vollständige axiale Fixierung erfolgt.

Besonders bevorzugt ist es, wenn die Grundplatte mit einem Werkstoff beschichtet ist, dessen Reibungskoeffizient kleiner ist als der Reibungskoeffizient der Grundplatte. Ein solcher Werkstoff kann beispielsweise PTFE sein, mit dem die elastomere Grundplatte beschichtet wird. Dieser Werkstoff weist entsprechend bessere Gleiteigenschaften als der für das übrige Dichtelement verwendete Werkstoff auf, so dass eine einfachere Verstellbarkeit des Regelkörpers erreicht wird.

Alternativ ist auf der Grundplatte eine Folie angeordnet, die einen geringeren Reibungskoeffizienten aufweist als die Grundplatte, wodurch die Gleiteigenschaften verbessert werden. Hierzu kann die Folie beim Spritzen der Dichtung vorab in die Form gelegt werden.

Vorzugsweise umgibt die Folie dabei die Öffnung und weist eine geringere Ausdehnung auf als die Grundplatte. Durch die geringere Berührungsfläche werden so die Gleiteigenschaften zusätzlich verbessert.

Dabei ist es besonders vorteilhaft, wenn die Vorspannkraft über den Umfang der Dichtlippe weitestgehend konstant ist, da durch die gleichmäßige Vorspannkraft auch ein gleichmäßiger Strömungswiderstand zur Abdichtung zur Verfügung gestellt wird, wodurch Leckagen über schlechter abgedichtete Umfangsbereiche vermieden werden.

Vorzugsweise ist zwischen der Dichtlippe und der Grundplatte ein Federelement angeordnet, über welches die Dichtlippe in von der Grundplatte weg weisender Richtung verspannt ist. Durch diese zusätzliche Druckkraft wird sowohl die Grundplatte zum Regelkörper als auch die Dichtlippe zum Gehäuse zusätzlich verspannt und somit der Anpressdruck erhöht. Durch diese Maßnahme wird die Dichtigkeit ebenfalls verbessert.

Besonders vorteilhaft ist es, wenn die zweite Anschlussöffnung einen Auslass bildet, da dann die geöffnete Seite zwischen Grundplatte und Dichtlippe zum Einlass und damit zum Bereich höheren Druckes weist. Durch diesen höheren Druck wird die Anpresskraft und damit die Kontaktkraft des Dichtelementes zum Gehäuse und zum Regelkörper proportional zur anliegenden Druckdifferenz erhöht und damit auch dessen Dichtigkeit erhöht.

Es wird somit ein Drehschieberventil für den Kühlkreislauf eines Kraftfahrzeugs geschaffen, welches sehr einfach herzustellen und zu montieren ist und dabei eine sehr hohe Dichtigkeit bei geringen notwendigen Stellkräften aufweist. Schäden während der Montage oder Fehlfunktionen während des Betriebes werden weitestgehend ausgeschlossen.

Ein Ausführungsbeispiel eines erfindungsgemäßen Drehschieberventils für einen Kühlkreislauf ist in den Figuren dargestellt und wird nachfolgend beschrieben.

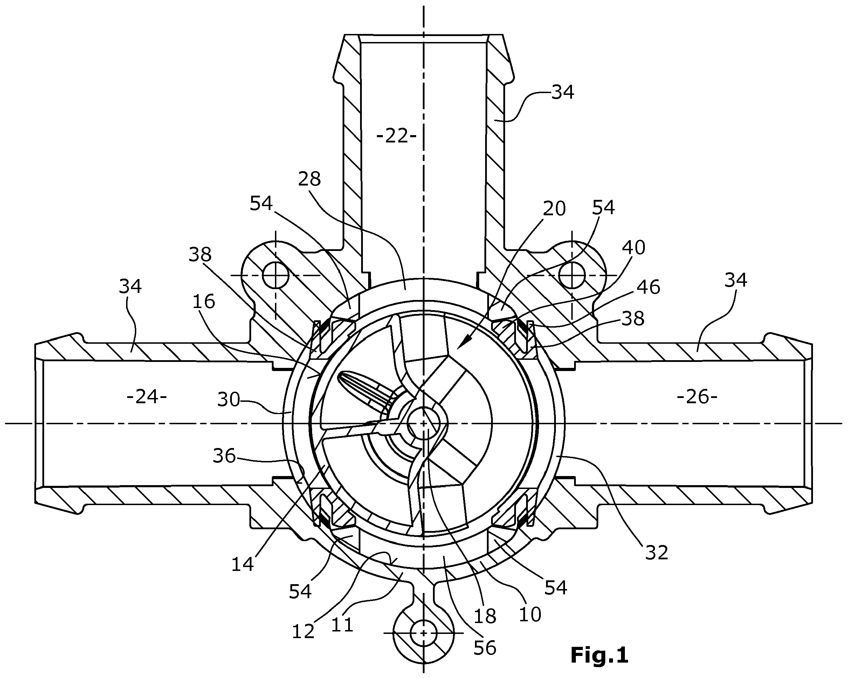

Die Figur 1 zeigt eine Seitenansicht eines erfindungsgemäßen Drehschieberventils in geschnittener Darstellung.

Die Figur 2 zeigt eine perspektivische Darstellung eines Dichtelementes des erfindungsgemäßen Drehschieberventils gemäß der Figur 1.

Das erfindungsgemäße Drehschieberventil für einen Kühlkreislauf weist ein Gehäuse 10 mit einer Gehäusewand 11 mit zylindrischer Innenkontur 12 auf, in der ein Regelkörper 14 mit einer zylindrischen Außenkontur 16 drehbar aufgenommen ist. Der Regelkörper 14 ist auf einer als Drehachse dienenden Welle 18 befestigt, die im Gehäuse 10 gelagert ist und sich durch eine das Gehäuse 10 axial begrenzende Wand nach außen zu einem nicht dargestellten Aktor erstreckt. Der Regelkörper 14 weist eine Durchströmungsöffnung 20 auf, welche dadurch entsteht, dass der Zylinder lediglich eine Teilmantelfläche aufweist beziehungsweise eine Öffnung in der Mantelfläche ausgebildet ist oder lediglich als Teilzylinder ausgebildet ist.

Je nach Stellung des Regelkörpers 14 wird entweder ein Einlass 22 verschlossen oder dieser Einlass 22 über die Durchströmungsöffnung 20 entweder mit einem ersten Auslass 24 oder einem zweiten Auslass 26 fluidisch verbunden. Hierzu sind am Gehäuse 10 über den Umfang der zylindrischen Innenkontur 12 drei Anschlussöffnungen 28, 30, 32 um 90° versetzt zueinander und senkrecht zur Drehachse angeordnet, wobei die erste, zentral zwischen den beiden anderen Anschlussöffnungen 30, 32 angeordnete Anschlussöffnung 28 den Einlass 22 bildet. Die Anschlussöffnungen 28, 30, 32 in der umfänglichen Gehäusewand 11 setzen sich jeweils als Kanäle in senkrecht zur Drehachse sich erstreckende Anschlussstutzen 34 fort.

Um nun zu verhindern, dass Kurzschlussströmungen vom Einlass 22 zu einem der Auslässe 24, 26 zwischen der Außenkontur 16 des Regelkörpers 14 und einer Gehäuseinnenwand 36 des Gehäuses 10 entstehen, werden Dichtelemente 38 eingesetzt, die im Bereich der Auslässe 24, 26 radial zwischen dem Regelkörper 14 und der Gehäuseinnenwand 36 des Gehäuses 10 platziert werden.

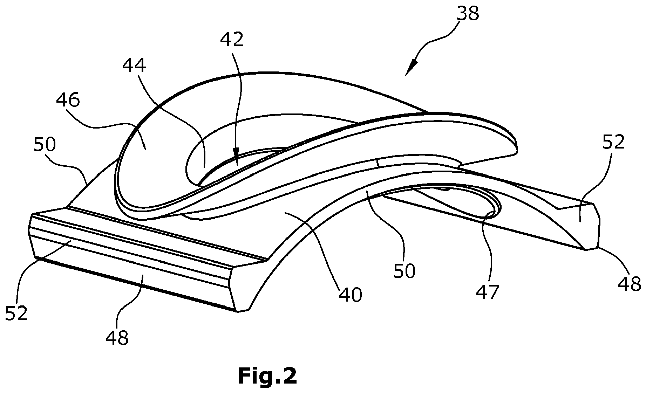

Die Dichtelemente 38 bestehen, wie in Figur 2 zu erkennen ist, aus einer Grundplatte 40 welche rechteckig geformt ist, jedoch eine Zylindermantelteilfläche bildet und somit komplementär oder mit geringfügig stärkerer Krümmung zur gegenüberliegenden Gehäuseinnenwand 36 und zum gegenüberliegenden Regelkörper 14 geformt ist.

In der Grundplatte 40 ist eine Öffnung 42 ausgebildet, die in ihrer Form im Wesentlichen der zweiten Anschlussöffnung 30, 32 entspricht und im eingebauten Zustand in der Flucht zu dieser angeordnet ist. Von einer die Öffnung 42 begrenzenden Öffnungskante 44 aus erstreckt sich eine Dichtlippe 46 im Querschnitt V-förmig zur Grundplatte 40, sodass die Grundplatte 40 den einen Schenkel des Vs bildet und die Dichtlippe 46 den zweiten Schenkel. Die offene Seite dieses Vs weist entsprechend in Richtung des Einlasses 22 und somit zu der Seite, an der im geschlossenen Zustand des Drehschieberventils der höhere Druck anliegt. Dies hat zur Folge, dass die beiden Schenkel auseinandergedrückt werden, wodurch die Dichtlippe 46 gegen die Gehäuseinnenwand 36 des Gehäuses 10 gedrückt wird und die Grundplatte 40 gegen den Regelkörper 14 belastet wird. Dies verbessert deutlich die Dichtigkeit, wobei zur Erhöhung dieses Druckes auch noch ein Federelement zwischen der Grundplatte 40 und der Dichtlippe 46 angeordnet werden könnte.

An der zum Regelkörper weisenden Seite der Grundplatte 40 weist diese eine Beschichtung 47 oder eine Folie beispielsweise aus PTFE auf, um die Gleiteigenschaften des Regelkörpers 14 am Dichtelement 38 zu verbessern.

Damit das Dichtelement 38 in seiner Position, in der die Öffnung 42 zur Anschlussöffnung 30, 32 fluchtet verbleibt, muss das Dichtelement 38 im Gehäuse 10 befestigt werden. Hierzu weist die Grundplatte 40 des Dichtelementes 38 zwei parallele Seitenflächen 48 auf, die sich senkrecht zu zwei parallelen Seitenkanten 50 erstrecken. Während die Seitenkanten 50 entsprechend der Zylinderform bogenförmig ausgebildet sind, sind die beiden Seitenflächen 48 gerade geformt, erstrecken sich axial und weisen eine Stützstruktur 52 in Form einer Verdickung der Grundplatte 40 auf, die sich entsprechend entlang der Länge der Grundplatte 40 erstreckt. Mit diesen verdickten Seitenflächen 48 liegt das Dichtelement 38 im Innern des Gehäuses 10 bei der Montage gegen Vorsprünge 54 an, die sich als axiale Stege an der Gehäuseinnenwand 36 erstrecken und deren Abstand etwas größer ist als der Abstand der Seitenflächen 48, so dass das Dichtelement 38 mit seiner Grundplatte 40 exakt zwischen die beiden zugehörigen Vorsprünge 54 geschoben werden kann, wodurch es in Umfangsrichtung formschlüssig gehalten wird. Die Länge der Seitenflächen 48 ist etwas geringer als die axiale Ausdehnung des Gehäuses 10 von einer axial begrenzenden Innenwand 56 zur gegenüberliegenden axial begrenzenden Innenwand. Entsprechend wird das Dichtelement 38 zwischen die Vorsprünge 54 von einer offenen axialen Seite in das Gehäuse 10 eingeschoben, bis die Seitenkante 50 die hintere axial begrenzende Innenwand 56 berührt. Ein Quetschen des Dichtelementes 38 wird jedoch durch die etwas geringere Länge ausgeschlossen. Anschließend kann der Regelkörper 14 mit der Welle 18 eingesetzt werden, wobei ein zu weites Verschieben des Dichtelementes 38 aufgrund seiner axialen Anlage nicht zu befürchten ist. Radial wird durch das Einschieben des Regelkörpers 14 das Dichtelement 38 leicht radial gestaucht, wodurch auch ein geringer Spalt zwischen den Vorsprüngen 54 und den Seitenflächen 48 entstehen kann, wobei jedoch die gegenüberliegende Position zwischen den Seitenflächen 48 und den Vorsprüngen 54 erhalten bleibt. Anschließend wird das Gehäuse 10 mittels eines nicht dargestellten Deckels an der Seite, von der aus das Dichtelement 38 und der Regelkörper 14 eingeschoben wurde, geschlossen. Die Bewegung des Dichtelemente ist axial und in Umfangsrichtung stark eingeschränkt, so dass ein Gegenüberliegen der Öffnung 42 und der zweiten Anschlussöffnung 30, 32 im Betrieb sichergestellt ist.

Auf diese Weise wird das Dichtelement ohne zu montierende Befestigungsmittel vollständig im Gehäuse bei der Montage formschlüssig fixiert. Montagefehler werden ebenfalls vermieden. Es ist lediglich jedem Auslass ein Dichtelement zuzuordnen, wobei die Befestigung zwischen den Vorsprüngen entweder durch axial Einschieben oder durch ein leichtes Zusammendrücken und radiales Einführen zwischen die Vorsprünge erfolgen kann. Das Drehschieberventil verhindert Kurzschlussströme durch eine sehr hohe Dichtigkeit und steigenden Anpresskräften bei wachsenden anliegenden Druckdifferenzen. Ein Einschub des Dichtelementes in das Gehäuse ist sowohl in axialer Richtung als auch in radialer Richtung möglich.

Es sollte deutlich sein, dass verschiedene Modifikationen des beschriebenen Drehschieberventils denkbar sind, ohne den Schutzbereich des Hauptanspruchs zu verlassen. So kann die Anzahl der Einlässe oder Auslässe sowie deren Position am Gehäuse geändert werden oder der Regelkörper als Zylinder mit einer Durchgangsbohrung ausgeführt werden. Selbstverständlich sind auch die Formen der Öffnungen frei wählbar.

## Patentansprüche

1. Drehschieberventil für einen Kühlkreislauf mit
einem eine zylindrische Innenkontur (12) aufweisenden Gehäuse (10), einem Regelkörper (14), der drehbar im Gehäuse (10) angeordnet ist, und eine zylindrische Außenkontur (16) und zumindest eine Durchströmungsöffnung (20) aufweist,
zumindest einer ersten Anschlussöffnung (28) am Gehäuse (10), zumindest einer senkrecht zu einer Drehachse des Regelkörpers (14) angeordneten zweiten Anschlussöffnung (30; 32) am Gehäuse (10), die über die zumindest eine Durchströmungsöffnung (20) des Regelkörpers (14) mit der zumindest einen ersten Anschlussöffnung (28) fluidisch verbindbar ist,
und zumindest einem Dichtelement (38), das radial zwischen dem Regelkörper (14) und einer die zumindest eine zweite Anschlussöffnung (30; 32) umgebenden zylindrischen Gehäuseinnenwand (36)
angeordnet ist, und eine Grundplatte (40) mit einer Öffnung (42) aufweist, die korrespondierend zur zweiten Anschlussöffnung (30; 32) im Gehäuse (10) ausgebildet ist,
wobei die Grundplatte (40) zumindest teilweise gegen den Regelkörper (14) anliegt, und zwei sich axial erstreckende Seitenflächen (48) aufweist, die gegenüberliegend zu zwei sich parallel zur Drehachse erstreckende Vorsprünge (54) angeordnet sind, die an der zylindrischen Gehäuseinnenwand (36) ausgebildet sind,
wobei das Dichtelement (38) im unverbauten Zustand geringfügig stärker gekrümmt ist als die Außenkontur (16) des Regelkörpers (14) und sich von der Grundplatte (40) eine Dichtlippe (46) erstreckt, die im Querschnitt V-förmig zur Grundplatte (40) ausgerichtet ist, und wobei
sich die Dichtlippe (46) von einer die Öffnung (42) begrenzenden Öffnungskante (44) der Grundplatte (40) aus vorgespannt gegen die zylindrische Gehäuseinnenwand (36) erstreckt.

2. Drehschieberventil für einen Kühlkreislauf nach Anspruch 1,
**dadurch gekennzeichnet, dass**
das Dichtelement (38) in Umfangsrichtung formschlüssig im Gehäuse (10) durch die Gehäuseinnenwand (36) und die sich axial erstreckenden Vorsprünge (54) befestigt ist.

3. Drehschieberventil für einen Kühlkreislauf nach Anspruch 1 oder 2,
**dadurch gekennzeichnet, dass**
an den Seitenflächen (48) des Dichtelementes (38) eine Stützstruktur (52) ausgebildet ist.

4. Drehschieberventil für einen Kühlkreislauf nach Anspruch 3,
**dadurch gekennzeichnet, dass**
die Stützstruktur (52) durch eine Verdickung der Seitenflächen (48) der Grundplatte (40) gebildet ist, wobei die Verdickungen der Seitenflächen (48) gegenüberliegend zu den Vorsprüngen (54) an der Gehäuseinnenwand (36) angeordnet sind.

5. Drehschieberventil für einen Kühlkreislauf nach einem der vorhergehenden Ansprüche,
**dadurch gekennzeichnet, dass**
die Grundplatte (40) zwei Seitenkanten (50) aufweist, die senkrecht zu den Seitenflächen (48) angeordnet sind, die gegenüberliegend zu den Vorsprüngen (54) angeordnet sind, und die gegenüberliegend zu zwei das Gehäuse (10) axial begrenzenden Innenwänden (56) angeordnet sind.

6. Drehschieberventil für einen Kühlkreislauf nach einem der vorhergehenden Ansprüche,
**dadurch gekennzeichnet, dass**
die Grundplatte (40) mit einem Werkstoff beschichtet ist, dessen Reibungskoeffizient kleiner ist als der Reibungskoeffizient der Grundplatte (40).

7. Drehschieberventil für einen Kühlkreislauf nach einem der vorhergehenden Ansprüche,
**dadurch gekennzeichnet, dass**
auf der Grundplatte (40) eine Folie aus einem Werkstoff angeordnet ist, dessen Reibungskoeffizient kleiner ist als der Reibungskoeffizient der Grundplatte (40).

8. Drehschieberventil für einen Kühlkreislauf nach Anspruch 7,
**dadurch gekennzeichnet, dass**
die Folie die Öffnung (42) in der Grundplatte (40) umgibt und in Umfangsrichtung eine geringere Ausdehnung aufweist als die Grundplatte (40).

9. Drehschieberventil für einen Kühlkreislauf nach einem der vorhergehenden Ansprüche,
**dadurch gekennzeichnet, dass**
die Vorspannkraft über den Umfang der Dichtlippe (46) konstant ist.

10. Drehschieberventil für einen Kühlkreislauf nach einem der vorhergehenden Ansprüche,
**dadurch gekennzeichnet, dass**
zwischen der Dichtlippe (46) und der Grundplatte (40) ein Federelement angeordnet ist, über welches die Dichtlippe (46) in von der Grundplatte (40) weg weisender Richtung verspannt ist.

11. Drehschieberventil für einen Kühlkreislauf nach einem der vorhergehenden Ansprüche,
**dadurch gekennzeichnet, dass**
die zweite Anschlussöffnung (30; 32) einen Auslass (24; 26) bildet.

## Claims

1. Rotary slide valve for a cooling circuit with
a housing (10) comprising a cylindrical inner contour (12),
a control body (14) which is rotatably arranged in the housing (10) and comprises a cylindrical outer contour (16) and at least one through-flow opening (20),
at least one first connection opening (28) at the housing (10),
at least one second connection opening (30; 32) at the housing (10), which is arranged perpendicular to an axis of rotation of the control body (14) and can be fluidically connected to the at least one first connection opening (28) via the at least one through-flow opening (20) of the control body (14), and at least one sealing element (38), which is arranged radially between the control body (14) and a cylindrical housing inner wall (36) surrounding the at least one second connection opening (30; 32), and comprises a base plate (40) with an opening (42), which is configured to correspond to the second connection opening (30; 32) in the housing (10),
wherein
the base plate (40) rests at least partially against the control body (14) and comprises two axially extending side surfaces (48) which are arranged opposite two projections (54) which extend parallel to the axis of rotation and are configured at the cylindrical inner wall (36) of the housing,
wherein the sealing element (38) in the unassembled state is slightly more strongly curved than the outer contour (16) of the control body (14) and a sealing lip (46) extends from the base plate (40), which sealing lip is aligned in cross-section in a V-shape with respect to the base plate (40),
wherein
the sealing lip (46) extends from an opening edge (44) of the base plate (40) bounding the opening (42) in a preloaded manner against the cylindrical inner wall (36) of the housing.

2. Rotary slide valve for a cooling circuit according to claim 1,
**characterised in that**
the sealing element (38) is attached in a form-locking manner in the housing (10) in the circumferential direction by the housing inner wall (36) and the axially extending projections (54).

3. Rotary slide valve for a cooling circuit according to claim 1 or 2,
**characterised in that**
a support structure (52) is configured at the side surfaces (48) of the sealing element (38).

4. Rotary slide valve for a cooling circuit according to claim 3,
**characterised in that**
the support structure (52) is defined by a thickening of the side surfaces (48) of the base plate (40), wherein the thickenings of the side surfaces (48) are arranged opposite the projections (54) at the inner wall (36) of the housing.

5. Rotary slide valve for a cooling circuit according to one of the preceding claims,
**characterised in that**
the base plate (40) comprises two side edges (50) which are arranged perpendicular to the side surfaces (48), which are arranged opposite the projections (54), and which are arranged opposite two inner walls (56) axially delimiting the housing (10).

6. Rotary slide valve for a cooling circuit according to one of the preceding claims,
**characterised in that**
the base plate (40) is coated with a material whose coefficient of friction is smaller than the coefficient of friction of the base plate (40).

7. Rotary slide valve for a cooling circuit according to one of the preceding claims,
**characterised in that**
a film made of a material whose coefficient of friction is smaller than the coefficient of friction of the base plate (40) is arranged on the base plate (40).

8. Rotary slide valve for a cooling circuit according to claim 7,
**characterised in that**
the film surrounds the opening (42) in the base plate (40) and comprises a smaller expansion in the circumferential direction than the base plate (40).

9. Rotary slide valve for a cooling circuit according to one of the preceding claims,
**characterised in that**
the preload force is constant over the circumference of the sealing lip (46).

10. Rotary slide valve for a cooling circuit according to one of the preceding claims,
**characterised in that**
a spring element is arranged between the sealing lip (46) and the base plate (40), via which spring element the sealing lip (46) is tensioned in a direction pointing away from the base plate (40).

11. Rotary slide valve for a cooling circuit according to one of the preceding claims,
**characterised in that**
the second connection opening (30; 32) defines an outlet (24; 26).

## Revendications

1. Vanne rotative à tiroir pour un circuit de refroidissement avec
un boîtier (10) comprenant un contour intérieur cylindrique (12),
un corps de régulation (14) qui est disposé de manière rotative dans le boîtier (10) et qui comprend un contour extérieur cylindrique (16) et au moins une ouverture de passage (20),
au moins une première ouverture de connexion (28) sur le boîtier (10), au moins une deuxième ouverture de connexion (30 ; 32) sur le boîtier (10), disposée perpendiculairement à un axe de rotation du corps de régulation (14), qui peut être reliée par voie fluidique à l'au moins une première ouverture de connexion (28) par l'au moins une ouverture de connexion (20) du corps de régulation (14),
et au moins un élément d'étanchéité (38) qui est disposé radialement entre le corps de régulation (14) et une paroi intérieure cylindrique (36) du boîtier entourant la au moins une deuxième ouverture de connexion (30 ; 32), et qui comprend une plaque de base (40) avec une ouverture (42) qui est réalisée en correspondance avec la deuxième ouverture de connexion (30 ; 32) dans le boîtier (10),
où
la plaque de base (40) s'appuie au moins partiellement contre le corps de régulation (14) et comprend deux surfaces latérales (48) s'étendant axialement, qui sont disposées en face de deux projections (54) s'étendant parallèlement à l'axe de rotation, qui sont formées sur la paroi intérieure cylindrique (36) du boîtier,
l'élément d'étanchéité (38) étant, à l'état non monté, un peu plus courbé que le contour extérieur (16) du corps de régulation (14) et une lèvre d'étanchéité (46) s'étendant depuis la plaque de base (40), laquelle est orientée en forme de V en section transversale par rapport à la plaque de base (40),
où
la lèvre d'étanchéité (46) s'étend à partir d'une bordure d'ouverture (44) de la plaque de base (40) délimitant l'ouverture (42), en étant précontrainte contre la paroi intérieure cylindrique (36) du boîtier.

2. Vanne rotative à tiroir pour un circuit de refroidissement selon la revendication 1,
**caractérisé en ce que**
l'élément d'étanchéité (38) est fixé par complémentarité de forme dans le boîtier (10) dans la direction circonférentielle par la paroi intérieure (36) du boîtier et les projections (54) s'étendant axialement.

3. Vanne rotative à tiroir pour un circuit de refroidissement selon la revendication 1 ou 2,
**caractérisé en ce que**
une structure de support (52) est formée sur les surfaces latérales (48) de l'élément d'étanchéité (38).

4. Vanne rotative à tiroir pour un circuit de refroidissement selon la revendication 3,
**caractérisé en ce que**
la structure de support (52) est formée par une surépaisseur des faces latérales (48) de la plaque de base (40), les surépaisseurs des faces latérales (48) étant disposées en face des projections (54) sur la paroi intérieure (36) du boîtier.

5. Vanne rotative à tiroir pour un circuit de refroidissement selon l'une des revendications précédentes,
**caractérisé en ce qu**
la plaque de base (40) comprend deux bords latéraux (50) disposés perpendiculairement aux faces latérales (48) disposées en regard des projections (54) et disposées en regard de deux parois internes (56) délimitant axialement le boîtier (10).

6. Vanne rotative à tiroir pour circuit de refroidissement selon l'une des revendications précédentes,
**caractérisé en ce que**
la plaque de base (40) est revêtue d'un matériau dont le coefficient de friction est inférieur au coefficient de friction de la plaque de base (40).

7. Vanne rotative à tiroir pour circuit de refroidissement selon l'une des revendications précédentes,
**caractérisé en ce que**
sur la plaque de base (40) est disposée une film en un matériau dont le coefficient de friction est inférieur au coefficient de friction de la plaque de base (40).

8. Vanne rotative à tiroir pour un circuit de refroidissement selon la revendication 7,
**caractérisé en ce que**
le film entoure l'ouverture (42) dans la plaque de base (40) et comprend une extension circonférentielle inférieure à celle de la plaque de base (40).

9. Vanne rotative à tiroir pour un circuit de refroidissement selon l'une des revendications précédentes,
**caractérisé en ce que**
la force de prétension est constante sur la circonférence de la lèvre d'étanchéité (46).

10. Vanne rotative à tiroir pour un circuit de refroidissement selon l'une des revendications précédentes,
**caractérisé en ce que**
entre la lèvre d'étanchéité (46) et la plaque de base (40) est disposé un élément élastique par lequel la lèvre d'étanchéité (46) est tendue dans la direction opposée à la plaque de base (40).

11. Vanne rotative à tiroir pour un circuit de refroidissement selon l'une des revendications précédentes,
**caractérisé en ce que**
la deuxième ouverture de connexion (30 ; 32) définit une sortie (24 ; 26).
